# EUROPÄISCHE PATENTSCHRIFT

(11) **EP 2 986 878 B1**
(45) Veröffentlichungstag und Bekanntmachung des Hinweises auf die Patenterteilung: **17.10.2018**
(21) Anmeldenummer: 14716756.3
(22) Anmeldetag: 05.04.2014
(51) Int. Cl.: F16L 21/00, F16L 25/14

(54) **MANSCHETTE**
SLEEVE
MANCHON DE SERRAGE

(30) Priorität: 19.04.2013 DE 202013101678 U
(43) Veröffentlichungstag der Anmeldung: 24.02.2016
(73) Patentinhaber: REHAU AG + Co, 95111 Rehau (DE)
(72) Erfinder: ROTH, Sebastian, 91056 Erlangen (DE); SIEBER, Jürgen, 91074 Herzogenaurach (DE)
(86) Internationale Anmeldenummer: PCT/EP2014/000916
(87) Internationale Veröffentlichungsnummer: WO 2014/169991

(56) Entgegenhaltungen:
- EP-A1- 2 072 877
- WO-A1-2009/107061
- WO-A1-2009/144682
- DE-B- 1 281 759

## Beschreibung

### Hintergrund der Erfindung

Die vorliegende Erfindung betrifft eine Manschette zum Anpressen einer Dichtmanschette an ein erstes und ein zweites Rohr und ein System mit einer derartigen Manschette. Insbesondere zur Herstellung einer Verbindung von zwei Abwasserrohren ist es bekannt, Rohrendabschnitte der beiden Rohre über eine Dichtmanschette zu verbinden und zum Sichern bzw. Festigen der Verbindung, eine Manschette zum Anpressen der Dichtmanschette an die beiden Rohre vorzusehen, welche in der Regel mittels Spannbändern bzw. Spannschellen an die Dichtmanschette gepresst wird.

Insbesondere im Abwasserbereich ist es oft erforderlich, zwei Rohre mit unterschiedlichen Außendurchmessern zu verbinden. So ist aus der DE10 2012 10 15 53 bekannt, zum Anpressen einer Dichtmanschette an die beiden Rohre eine Manschette vorzusehen, die mittels Spannbändern zum Anpressen an die Dichtmanschette zusammenziehbar ist, wobei die Konstruktion der Manschette eine Anpassung an die unterschiedlichen Außendurchmesser möglich macht.

Bei der Verbindung von Rohren mit sehr unterschiedlichen Außendurchmessern stößt diese Lösung an ihre Grenzen, da es auf Grund der starken mechanischen Belastung der Manschette am Übergang der sehr unterschiedlichen Außendurchmesser der Rohre an deren Verbindungsstelle zu Undichtigkeiten oder sogar zum Bruch der Manschette kommen kann.

### Zugrundeliegende Aufgabe

Gegenüber der bekannten Lösung ist es Aufgabe der vorliegenden Erfindung, eine verbesserte Vorrichtung zum Anpressen einer Dichtmanschette an ein erstes und ein zweites Rohr sehr unterschiedlichen Außendurchmessers und ein System und eine Anordnung mit einer derartigen Vorrichtung anzugeben.

### Erfindungsgemäße Lösung

Diese Aufgabe wird erfindungsgemäß mit einer Manschette zum Anpressen einer Dichtmanschette an ein erstes und ein zweites Rohr sehr unterschiedlichen Außendurchmessers mit den Merkmalen des Anspruchs 1, mit einem System mit den Merkmalen des Anspruchs 9 und mit einer Anordnung mit den Merkmalen des Anspruchs 10 gelöst. Erfindungsgemäß ist dazu eine Manschette zum Anpressen einer Dichtmanschette an ein erstes und ein zweites Rohr vorgesehen, die über die Dichtmanschette miteinander verbunden sind, wobei zum Bilden der Verbindung ein erster von zwei Endabschnitten der Dichtmanschette einen Rohrendabschnitt des ersten Rohrs aufnimmt und der zweite Endabschnitt einen Rohrendabschnitt des zweiten Rohrs aufnimmt, wobei die Manschette eine Mehrzahl von ersten Anpresselementen und eine Mehrzahl von zweiten Anpresselementen aufweist, wobei jedes erste und jedes zweite Anpresselement wenigstens teilweise aus einem verformbaren Material besteht, wobei die ersten Anpresselemente entlang eines Umfangs eines ersten Kreises aufeinanderfolgend angeordnet sind und einen ersten Manschetten-Endabschnitt mit einer ersten Öffnung zur Aufnahme des ersten Endabschnitts der Dichtmanschette bilden, wobei die zweiten Anpresselemente entlang eines Umfangs eines zweiten Kreises aufeinanderfolgend angeordnet sind und einen zweiten Manschetten-Endabschnitt mit einer zweiten Öffnung zur Aufnahme des zweiten Endabschnitts der Dichtmanschette bilden, wobei wenigstens ein erstes Anpresselement mit einem zweiten Anpresselement durch wenigstens ein verformbares Verbindungselement verbunden ist, wobei sich jeweils zwei benachbarte erste Anpresselemente des ersten Manschetten-Endabschnitts in radialer Richtung des ersten Kreises innerhalb eines Überlappungsbereichs überlappen, wobei eines der beiden benachbarten ersten Anpresselemente an dem jeweiligen anderen ersten Anpresselement beweglich angebracht ist, und wobei der Überlappungsbereich durch aufeinander Zubewegen der benachbarten ersten Anpresselemente vergrößerbar oder durch voneinander Wegbewegen der benachbarten ersten Anpresselemente verkleinerbar ist, wobei sich jeweils zwei benachbarte zweite Anpresselemente des zweiten Manschetten-Endabschnitts in radialer Richtung des zweiten Kreises innerhalb eines Überlappungsbereichs überlappen, wobei eines der beiden benachbarten zweiten Anpresselemente an dem jeweiligen anderen zweiten Anpresselement beweglich angebracht ist, und wobei der Überlappungsbereich durch aufeinander Zubewegen der benachbarten zweiten Anpresselemente vergrößerbar oder durch voneinander Wegbewegen der benachbarten zweiten Anpresselemente verkleinerbar ist, wobei jedes erste Anpresselement wenigstens eine erste Anpressfläche aufweist, die zum Anpressen des ersten Endabschnitts der Dichtmanschette an den Rohrendabschnitt des ersten Rohrs vorgesehen ist, wenn dieser in der ersten Öffnung aufgenommen ist, wobei jedes zweite Anpresselement wenigstens eine zweite Anpressfläche aufweist, die zum Anpressen des zweiten Endabschnitts der Dichtmanschette an den Rohrendabschnitt des zweiten Rohrs vorgesehen ist, wenn dieser in der zweiten Öffnung aufgenommen ist, wobei durch Vergrößern aller Überlappungsbereiche des ersten Manschetten-Endabschnitts die erste Öffnung des ersten Manschetten-Endabschnitts unter Verformung aller ersten Anpresselemente verengbar ist, wobei durch Vergrößern aller Überlappungsbereiche des zweiten Manschetten-Endabschnitts die zweite Öffnung des zweiten Manschetten-Endabschnitts unter Verformung aller zweiten Anpresselemente verengbar ist, wobei durch das Verengen der ersten Öffnung die ersten Anpressflächen aller ersten Anpresselemente an den ersten Endabschnitt der Dichtmanschette anpressbar sind, und wobei durch das Verengen der zweiten Öffnung die zweiten Anpressflächen aller zweiten Anpresselemente an den zweiten Endabschnitt der Dichtmanschette anpressbar sind, die sich dadurch auszeichnet, dass das Verbindungselement wenigstens einen Durchbruch aufweist.

Eine derartige erfindungsgemäße Manschette zum Anpressen einer Dichtmanschette an ein erstes und ein zweites Rohr löst die gestellte Aufgabe, eine verbesserte Vorrichtung zum Anpressen einer Dichtmanschette an ein erstes und ein zweites Rohr sehr unterschiedlicher Außendurchmesser anzugeben, wobei eine hohe Fluiddichtheit erreicht wird. Im Folgenden wird stets Bezug auf die bereits oben genannte Druckschrift DE10 2012 10 15 53 genommen. Die vorliegende Erfindung ist als Weiterentwicklung der dort offenbarten Manschette zum Anpressen einer Dichtmanschette an ein erstes und ein zweites Rohr zu verstehen.

Im Rahmen der vorliegenden Erfindung hat sich als sehr vorteilhaft herausgestellt, wenn die Manschette derart ausgeformt ist, dass das Verbindungselement eine Vielzahl von Durchbrüchen aufweist.

Eine Manschette, bei der das Verbindungselement eine Vielzahl von Durchbrüchen aufweist, ist ganz besonders dazu geeignet, ein erstes und ein zweites Rohr sehr unterschiedlichen Außendurchmessers miteinander fluiddicht zu verbinden.

Insbesondere durch das Vorsehen einer Vielzahl von Durchbrüchen an dem Verbindungselement kann die Manschette an die Erfordernisse der Verbindung eines ersten und eines zweiten Rohrs sehr unterschiedlichen Außendurchmessers sehr gut angepasst werden, indem das Verbindungselement eine hohe Flexibilität und Verformbarkeit aufweist und so den Durchmessersprung zwischen erstem und zweitem Rohr überbrückt.

Im Rahmen der vorliegenden Erfindung hat sich als sehr günstig erwiesen, wenn die Manschette derart ausgelegt ist, dass der Durchbruch eine Rechteckform, oder eine Quadratform, oder eine Dreiecksform, oder eine Vieleckform, oder eine Ellipsenform, oder eine Kreisform, oder eine Y-Form, oder eine H-Form, oder eine Mischform aus den vorgenannten Formen aufweist.

Ein Durchbruch, der eine Rechteckform, oder eine Quadratform, oder eine Dreiecksform, oder eine Vieleckform, oder eine Ellipsenform, oder eine Kreisform, oder eine Y-Form, oder eine H-Form, oder eine Mischform oder eine Kombination aus den vorgenannten Formen aufweist, ist in besonderem Maße dazu geeignet, ein erstes und ein zweites Rohr sehr unterschiedlichen Außendurchmessers miteinander fluiddicht zu verbinden.

Insbesondere durch das Vorsehen einer Vielzahl von Durchbrüchen, die eine Rechteckform, oder eine Quadratform, oder eine Dreiecksform, oder eine Vieleckform, oder eine Ellipsenform, oder eine Kreisform, oder eine Y-Form, oder eine H-Form, oder eine Mischform aus den vorgenannten Formen aufweisen, kann die Manschette die Verbindung eines ersten und eines zweiten Rohrs sehr unterschiedlichen Außendurchmessers sicherstellen, indem das Verbindungselement eine ganz besonders hohe Flexibilität und Verformbarkeit - unter Beibehaltung einer hohen Stabilität und Belastbarkeit - aufweist und so den Durchmessersprung zwischen erstem und zweitem Rohr besonders vorteilhaft überbrückt. Durch die Wahl der Form der Durchbrüche, die - wie vorstehend beschrieben eine Rechteckform, oder eine Quadratform, oder eine Dreiecksform, oder eine Vieleckform, oder eine Ellipsenform, oder eine Kreisform, oder eine Y-Form, oder eine H-Form, oder eine Mischform aus den vorgenannten Formen aufweisen können, neben der Anzahl und Verteilung, sowie der Wahl der Dicke und Breite der die Durchbrüche begrenzenden Stege, die Flexibilität und Verformbarkeit des Verbindungselements gezielt vorgegeben werden. Hierdurch gelingt es, eine Anpassung an die Erfordernisse einer entsprechenden Rohrverbindung in maßgeschneiderter Art zu erreichen.

Weiterhin hat sich als besonders praktikabel erwiesen, wenn die Manschette dergestalt ausgelegt ist, dass die Durchbrüche im Verbindungselement von gleicher Form sind. Durchbrüche im Verbindungselement von gleicher Form sind besonders bevorzugt, da damit die Kräfteverteilung in der Manschette bei angeschlossenen und fluiddicht verbundenen ersten und zweiten Rohr ganz besonders gleichmäßig ist, was der Gebrauchseigenschaft der dauerhaften Dichtheit der Manschette in hohem Maße zuträglich ist.

Weiterhin hat sich als günstig erwiesen, wenn die Manschette in einer Form ausgelegt ist, dass die Durchbrüche im Verbindungselement von unterschiedlicher Form sind. Durchbrüche im Verbindungselement von unterschiedlicher Form sind besonders günstig, da damit der Materialeinsatz bei der Herstellung des Verbindungselements minimiert werden kann, wobei die Kräfteverteilung in der Manschette bei angeschlossenen und fluiddicht verbundenen ersten und eines zweiten Rohr in ganz besonderem Maße gleichmäßig ist. Damit einher geht eine große Stabilität und Flexibilität der erfindungsgemäßen Manschette. Auch dies ist der Gebrauchseigenschaft und der Lebensdauer der Manschette in hohem Maße zuträglich.

In einer anderen vorteilhaften Ausbildungsform der Erfindung kann vorgesehen sein, dass die Manschette so ausgeformt ist, dass benachbarte Durchbrüche voneinander gleich oder ungleich beabstandet angeordnet sind.

Das Anordnen von benachbarten Durchbrüchen, die voneinander gleich oder ungleich beabstandet sind, ist günstig, weil dadurch je nach den Gegebenheiten die Durchbrüche in symmetrischer oder in unsymmetrischer Weise anordenbar sind, was seinerseits Auswirkungen auf die Funktionalität der Manschette hat. Es ist dadurch beispielsweise möglich, eine Manschette zu bauen, bei der entsprechend der Erfordernisse der zu verbindenden Rohre, die durchaus erheblich unterschiedlich sein können, eine maßgeschneiderte Anschlusslösung bereitstellbar ist. Dies kann beispielsweise die Flexibilität der Rohrmaterialien betreffen oder zu erreichende Festigkeiten bei der Verbindung eines ersten und eines zweiten Rohrs.

Im Rahmen der vorliegenden Erfindung hat sich als sehr günstig erwiesen, wenn die Manschette derart ausgelegt ist, dass die Durchbrüche symmetrisch angeordnet sind.

Das symmetrische Anordnen der Durchbrüche ist vorteilhaft, weil dadurch der Herstellungsaufwand minimiert werden kann, was die Konstruktion angeht. Zum anderen ist die Manschette im Hinblick auf die beiden Anschlussmöglichkeiten gleichwertig, was die Nutzung der Manschette vereinfacht, weil nicht auf eine etwaige Vorzugsseite zu achten ist. Außerdem ist eine Manschette mit symmetrischer Anordnung der Durchbrüche stabiler gegen Deformationen, als eine solche, die keine symmetrische Anordnung aufweist.

In einer anderen Ausführungsform können die Durchbrüche unsymmetrisch angeordnet sein. Bei einer unsymmetrischen Anordnung der Durchbrüche liegt eine Vorzugsseite vor, die beispielsweise für die Anordnung des kleineren zu verbindenden Rohrs geeignet ist. Dadurch bedingt liegt ein besser angepasster Spannbereich vor, der insbesondere weiter nutzbar ist.

Es kann im Rahmen der Erfindung auch vorgesehen sein, dass Abschnitte des Verbindungselements eine besonders dünne Wandstärke aufweisen, wodurch eine hohe Flexibilität resultiert. Somit kann eine solche erfindungsgemäße Manschette die fluiddichte Verbindung eines ersten und eines zweiten Rohrs sehr unterschiedlichen Außendurchmessers in ganz besonders günstiger Weise sicherstellen.

Die Abschnitte des Verbindungselements, die eine besonders dünne Wandstärke aufweisen, können hinsichtlich Anzahl, Form und Beabstandung voneinander in vielfältiger Weise vorgesehen und kombiniert sein.

Solche Abschnitte des Verbindungselements mit einer besonders dünnen Wandstärke lassen sich auf einfache Art bei der Herstellung der Manschette beispielsweise im Spritzgussverfahren bilden, indem das Werkzeug an den jeweiligen Stellen entsprechend ausgelegt ist.

Es ist im Rahmen der vorliegenden Erfindung besonders vorteilhaft, wenn vorgesehen ist, dass die Manschette derart gestaltet ist, dass das Verbindungselement, welches wenigstens einen Durchbruch aufweist, und das erste und das zweite Anpresselement ein einstückiges Manschettenelement bilden.

Bei einer praktischen Ausführungsform entspricht die Anzahl der vorgesehenen ersten Anpresselemente der Anzahl der vorgesehenen zweiten Anpresselemente, wobei die Anzahl der vorgesehenen Verbindungselemente der Anzahl der vorgesehenen ersten Anpresselemente entspricht, wobei jedes erste Anpresselement einem zweiten Anpresselement in axialer Richtung bzw. in axialer Richtung der Manschette bzw. parallel zur axialen Richtung der Manschette gegenüberliegt und mit diesem durch ein zwischen dem ersten und zweiten Anpresselement angeordnetes Verbindungselement zum Ausbilden eines Manschettenelements verbunden ist, wobei das Verbindungselement und das erste und das zweite Anpresselement besonders bevorzugt ein einstückiges Manschettenelement bilden. Jedes der einstückigen Manschettenelemente kann besonders bevorzugt aus einem Kunststoffmaterial bestehen, wobei das Kunststoffmaterial insbesondere Polyamid oder Polypropylen sein kann. Besonders bevorzugt handelt es sich bei dem Kunststoffmaterial um ein thermoplastisches Kunststoffmaterial, mit welchem vorteilhaft eine kostengünstige Herstellung einer Vielzahl der Manschettenelemente im Spritzgussverfahren möglich ist.

Hierdurch ist es besonders einfach, den wenigstens einen Durchbruch in dem Verbindungselement bereits bei der Herstellung des Manschettenelements im Spritzgussverfahren auszubilden, indem die dafür vorgesehene Form entsprechend gestaltet ist.

Alternativ kann der wenigstens eine Durchbruch im Verbindungselement auch nach der Urformung des Manschettenelements erzeugt werden. Hierzu eignen sich verschiedene Verfahren. Beispielsweise kann der Durchbruch durch einen Stanzvorgang gebildet werden. Andere Herstellungstechniken sind beispielsweise Fräsen, Scheiden, Bohren, Laserschneiden oder Wasserstrahlschneiden. Derartige Verfahren sind schnell arbeitend und genau in der Erzeugung des Durchbruchs. Dennoch ist die Urformung bereits im Spritzgussprozess bei der Herstellung des Manschettenelements zu bevorzugen, da dann kein weiterer Fertigungsschritt zur Herstellung des Durchbruchs mehr notwendig ist.

In einer alternativen Ausführungsform der Erfindung ist vorgesehen, dass jeweils ein erstes Anpresselement jeweils einem zweiten Anpresselement in axialer Richtung der Manschette gegenüberliegend angeordnet ist, wobei die Anpresselemente durch jeweils ein Verbindungselement miteinander verbunden sind. Jedes Verbindungselement weist eine Wellenstruktur mit einem Freistich auf, um eine gute Verformbarkeit in axialer und radialer Richtung bereitzustellen bzw. zu schaffen. Gemäß vorliegender Erfindung weist das Verbindungselement wenigstens einen Durchbruch auf, wobei eine Vielzahl von Durchbrüchen im Hinblick auf eine hohe Verformbarkeit bevorzugt ist.

Die Aufgabe, ein System anzugeben, erfährt ihre Lösung in Anspruch 9.

Das System mit einer Manschette in der vorstehend beschriebenen Art umfasst eine Dichtmanschette, wenigstens eine erste Spannschelle und wenigstens eine zweite Spannschelle.

Die Aufgabe, eine Anordnung anzugeben, erfährt ihre Lösung in Anspruch 10.

Die Anordnung umfasst ein System, wie vorstehend beschrieben, und ein erstes und ein zweites Rohr, die über die Dichtmanschette miteinander verbunden sind, wobei zum Bilden der Verbindung ein erster von zwei Endabschnitten der Dichtmanschette einen Rohrendabschnitt des ersten Rohrs aufnimmt und der zweite Endabschnitt einen Rohrendabschnitt des zweiten Rohrs aufnimmt, wobei der erste Manschetten-Endabschnitt an den ersten Endabschnitt der Dichtmanschette gepresst ist, wobei der zweite Manschetten-Endabschnitt an den zweiten Endabschnitt der Dichtmanschette gepresst ist.

Ein Ausführungsbeispiel eines erfindungsgemäßen Systems, das ein erstes und ein zweites Rohr miteinander verbindet und zusammen mit dem ersten und zweiten Rohr eine erfindungsgemäße Anordnung bildet, ist derartig ausgeführt, dass das zweite Rohr einen kleineren Außendurchmesser als das erste Rohr aufweist. Das System weist eine erfindungsgemäße Manschette, eine Dichtmanschette und eine erste und eine zweite Spannschelle auf. Mit der erfindungsgemäßen Manschette ist insbesondere auch die Bereitstellung einer Verbindung zwischen Rohren mit sehr unterschiedlichen Außendurchmessern möglich ist, und zwar dadurch, dass durch das Vorsehen der vergrößerbaren bzw. verkleinerbaren Überlappungsbereiche vorteilhaft eine Anpassung der erfindungsgemäßen Manschette in Kombination mit dem erfindungsgemäßen Vorsehen, dass das Verbindungselement wenigstens einen Durchbruch aufweist, an die bestehenden Abweichungen zwischen den Außendurchmesser erfolgen kann bzw. vorgenommen werden kann. Verwendung findet die erfindungsgemäße Manschette überall dort, wo Rohre unterschiedlichen Durchmessers fluiddicht zu verbinden sind, also in der Versorgung mit Wasser, Gas, und anderen Medien, in der Entsorgung dieser Medien, insbesondere im Bereich der Abwassertechnik, allgemein überall dort, wo in Rohren Fluide aufgenommen, gespeichert und geleitet werden. Dies betrifft die städtische Ver- und Entsorgung, die Industrieinfrastruktur, die Landwirtschaft, den Obst- und Gartenbau, die Lebensmittel-, Getränke-, Medizin- und Pharmatechnik, sowie den Fahrzeug-, Flugzeug- und Schiffsbau.

Weitere wichtige Merkmale und Vorteile der Erfindung ergeben sich aus den Unteransprüchen, aus den Fig. und aus der zugehörigen Figurenbeschreibung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Fig. dargestellt und werden in der nachfolgenden Beschreibung näher erläutert, wobei sich gleiche Bezugszeichen auf gleiche oder funktional gleiche oder ähnliche Bauteile beziehen.

### Kurzbeschreibung der Zeichnungen

Nachfolgend werden Ausführungsbeispiele der Erfindung anhand der beigefügten Zeichnungen näher erläutert.

Es zeigt:
- Fig. 1: eine dreidimensionale Darstellung eines ersten Ausführungsbeispiels einer erfindungsgemäßen Manschette, die aus mehreren Manschettenelementen besteht;
- Fig. 2: eine dreidimensionale Darstellung eines Manschettenelements der in Fig. 1 dargestellten Manschette;
- Fig. 3: eine Vorderansicht des Manschettenelements der Fig. 2;
- Fig. 4a - 4d: Vorderansicht von Ausschnitten Manschettenelementen verschiedener Ausfü h rungsbeispiele;
- Fig. 5: eine Schnittdarstellung eines Ausführungsbeispiels eines erfindungsgemäßen Systems, das ein erstes und ein zweites Rohr miteinander verbindet.

Wie bereits vorstehend ausgeführt, wird im Folgenden stets Bezug auf die oben genannte Druckschrift DE 10 2012 101553 A1 genommen. Die vorliegende Erfindung ist als Weiterentwicklung der dort offenbarten Manschette zum Anpressen einer Dichtmanschette an ein erstes und ein zweites Rohr zu verstehen.

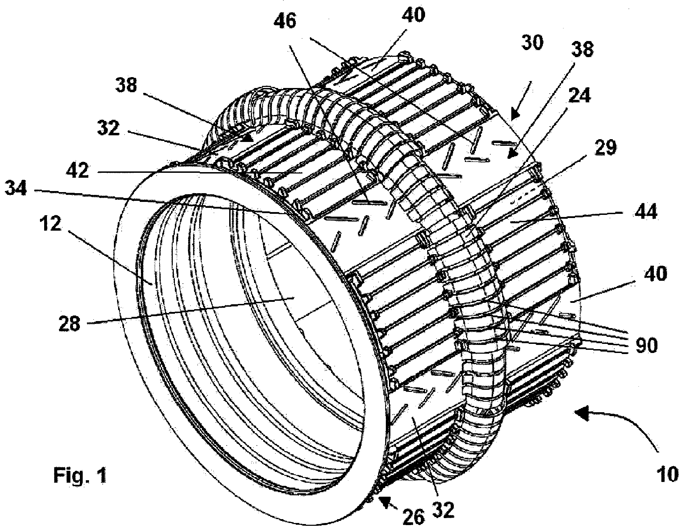

Die Fig. 1 zeigt eine dreidimensionale Darstellung eines ersten Ausführungsbeispiels einer erfindungsgemäßen Manschette 10, die aus mehreren Manschettenelementen 38 besteht. Der erste Manschetten-Endabschnitt 26 der in Fig. 1 dargestellten Manschette 10 ist aus einer Mehrzahl von ersten Anpresselementen 32 gebildet und weist eine erste Öffnung 28 auf und der zweite Manschetten-Endabschnitt 30 ist aus einer Mehrzahl von zweiten Anpresselementen 40 gebildet und weist eine zweite Öffnung 29 auf. Die ersten Anpresselemente 32 sind zum Bilden des ersten Manschetten-Endabschnitts 26 entlang eines Umfangs eines ersten Kreises (hier nicht veranschaulicht) aufeinanderfolgend angeordnet und die zweiten Anpresselemente 40 sind zum Bilden des zweiten Manschetten-Endabschnitts 30 entlang eines Umfangs eines zweiten Kreises (hier nicht veranschaulicht), der von dem ersten Kreis beabstandet ist, aufeinanderfolgend angeordnet. Die Anzahl der ersten Anpresselemente 32 entspricht der Anzahl der zweiten Anpresselemente 40 und die Anzahl der vorgesehenen Verbindungselemente 24 entspricht der Anzahl der ersten bzw. zweiten Anpresselemente 32, 40. Jedes erste Anpresselement 32 ist einem zweiten Anpresselement 40 gegenüberliegend angeordnet - und zwar in axialer Richtung der Manschette 10 bzw. parallel zur axialen Richtung der Manschette 10 - und mit diesem durch ein zwischen dem ersten und zweiten Anpresselement 32, 40 angeordnetes Verbindungselement 24 zum Ausbilden eines Manschettenelements 38 verbunden.

Jeweils ein Verbindungselement 24 und ein erstes und ein zweites einander gegenüberliegendes Anpresselement 32, 40, die durch das Verbindungselement 24 miteinander verbunden sind, bilden zusammen ein einstückiges Manschettenelement 38.

Gemäß vorliegender Erfindung weist das Verbindungselement 24 wenigstens einen Durchbruch 90 auf. Vorliegend sind eine Vielzahl von Durchbrüchen 90 am Verbindungselement 24 vorhanden, die jeweils einen etwa rechteckigen Querschnitt aufweisen und etwa parallel zueinander angeordnet sind. Jeweils zwei benachbarte Durchbrüche 90 sind etwa gleich voneinander beabstandet.

Der Fig. 1 ist zu entnehmen, dass die der ersten Öffnung 28 des ersten Manschetten-Endabschnitts 26 abgewandten Seiten der ersten Anpresselemente 32 zusammen einen umlaufenden ersten Anlagebereich 42 zum Anlegen wenigstens einer umlaufenden ersten Spannschelle (hier nicht dargestellt) ausbilden, wobei zum Verengen der ersten Öffnung 28 alle Überlappungsbereiche 34 des ersten Manschetten-Endabschnitts 26 durch Anziehen der ersten Spannschelle vergrößerbar sind (vgl. hierzu auch Fig. 1). Ferner bilden die der zweiten Öffnung 29 des zweiten Manschetten-Endabschnitts 30 abgewandten Seiten der zweiten Anpresselemente 40 zusammen einen umlaufenden zweiten Anlagebereich 44 zum Anlegen wenigstens einer umlaufenden zweiten Spannschelle aus (hier nicht dargestellt), wobei zum Verengen der zweiten Öffnung 29 alle Überlappungsbereiche 34 (in Fig. 1 nicht erkennbar) des zweiten Manschetten-Endabschnitts 30 durch Anziehen der zweiten Spannschelle vergrößerbar sind.

Durch Verengen der ersten Öffnung 28 und der zweiten Öffnung 29 werden die hier nicht dargestellten Rohre 14, 16 unter Zuhilfenahme der Dichtmanschette 12 fluiddicht verbunden.

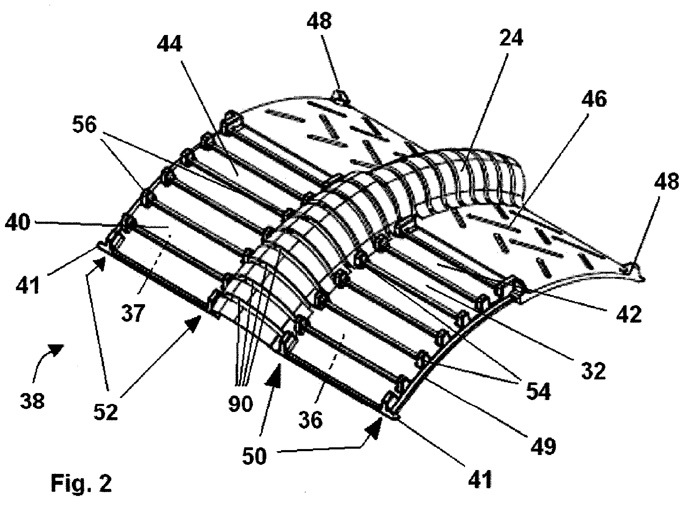

Die Fig. 2 zeigt eine dreidimensionale Darstellung eines der Manschettenelemente 38 der Fig. 1, wobei das erste Anpresselement 32 des Manschettenelements 38 eine erste Anpressfläche 36 aufweist, und wobei das erste Anpresselement 40 des Manschettenelements 38 eine zweite Anpressfläche 37 aufweist.

Das Verbindungselement 24 ist gewölbt ausgebildet, um besonders wirksam Verformungen beim Anpressen der Dichtmanschette 12 aufzunehmen. Ferner unterstützt die Wölbung die Ringsteifigkeit der Kupplung. Die Wölbung ist abschnittsweise mit kleinerer Erstreckung in radialer Richtung ausgeführt, wobei der Abschnitt der Wölbung mit der kleineren Erstreckung in Radialrichtung in einem Abschnitt eines benachbarten Manschettenelements 38 mit der größeren Erstreckung in radialer Richtung aufnehmbar ist. Auf diese Weise werde Lücken vermieden und die Dichtmanschette geschützt. Die Durchbrüche 90 im Verbindungselement 24 erleichtern die Verformung in Umfangsrichtung.

Der Fig. 2 ist zu entnehmen, dass insbesondere im Überlappungsbereich 34 jedes erste Anpresselement 32 einen der ersten Öffnung 28 zugewandten Bereich aufweist, der mehrere Durchbrüche 46 bzw. Schlitze 46 aufweist. Entsprechendes ist auch für jedes zweite Anpresselement 40 vorgesehen.

Die Fig. 2 zeigt weiter, dass zur Führung der ersten Spannschelle zwei den ersten Anlagebereich 42 abschnittsweise beidseitig begrenzende erste Spannschellen-Führungsvorrichtungen 50 vorgesehen sind, zwischen denen die erste Spannschelle führbar ist, und zur Führung der zweiten Spannschelle sind zwei den zweiten Anlagebereich 44 abschnittsweise beidseitig begrenzende zweite Spannschellen-Führungsvorrichtungen 52 vorgesehen, zwischen denen die zweite Spannschelle führbar ist. Jede erste Spannschellen-Führungsvorrichtung 50 ist von einer Mehrzahl von ersten Führungsstegen 54 gebildet, wobei an der der ersten Öffnung 28 abgewandten Seite jedes ersten Anpresselements 32 mehrere voneinander beabstandete erste Führungsstege 54 in Mehrzahl vorgesehen sind. Jede zweite Spannschellen-Führungsvorrichtung 52 ist von einer Mehrzahl von zweiten Führungsstegen 56 gebildet, wobei an der der zweiten Öffnung 29 abgewandten Seite jedes zweiten Anpresselements 40 mehrere voneinander beabstandete zweite Führungsstege 56 in Mehrzahl vorgesehen sind.

Zum beweglichen Anbringen des ersten Anpresselements 32 jedes Manschettenelements 38 an einem ersten Anpresselement 32 eines benachbarten Manschettenelements 38 und zu dem beweglichen Anbringen des zweiten Anpresselements 40 jedes Manschettenelements 38 an einem zweiten Anpresselement 40 eines benachbarten Manschettenelements 38 - bzw. zum beweglichen Anbringen jedes Manschettenelements 38 an einem benachbarten Manschettenelement 38 - ist an jedem Manschettenelement 38 ein Paar von Führungseinrichtungen 48 vorgesehen, zwischen denen ein benachbartes Manschettenelement 38 bewegbar ist. Jede der Führungseinrichtungen 48 ist in Form einer Schnappnase 48 ausgebildet. Das jeweils benachbarte Manschettenelement 38 ist rastend zwischen den Schnappnasen 48 aufnehmbar und im aufgenommenen Zustand bewegbar, und zwar an dem jeweils anderen der benachbarten Manschettenelemente 38. Zum rastenden Aufnehmen des benachbarten Manschettenelements 38 zwischen den Führungseinrichtungen bzw. Schnappnasen 48 sind an jedem Manschettenelement 38 ein Paar von gegenüberliegenden Randelementen 49 vorgesehen, die in jeweils eine der Führungseinrichtungen bzw. Schnappnasen 48 des benachbarten Manschettenelements 38 einrastbar sind.

An jedem ersten Anpresselement 32 und an jedem zweiten Anpresselement 40 ist ferner ein Anschlag 41 zum Begrenzen der Größe des Überlappungsbereichs 34 vorgesehen.

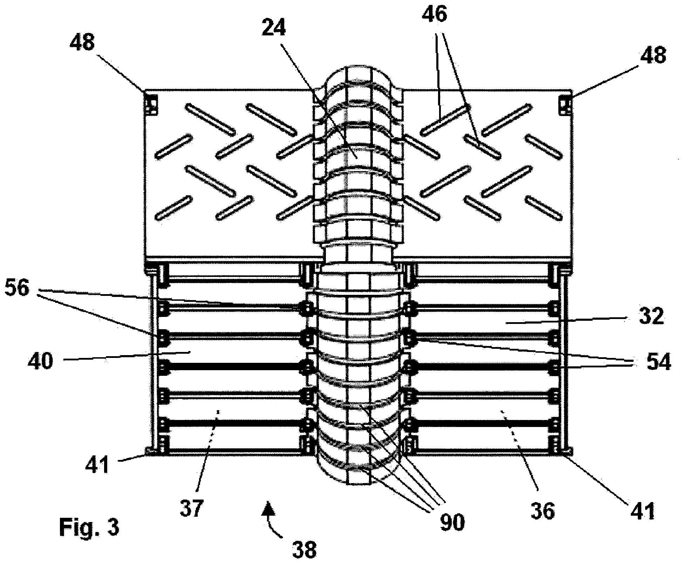

Die Fig. 3 zeigt eine Vorderansicht des Manschettenelements der Fig. 2.

Die Bezugszeichen entsprechen einander, so dass hier auf eine detaillierte Besprechung verzichtet werden kann. Wesentlich ist das erfindungsgemäße Vorsehen von Durchbrüchen 90 im Verbindungselement 24, welche die Verformung in Umfangsrichtung erleichtern. Vorliegend sind eine Vielzahl von Durchbrüchen 90 am Verbindungselement 24 vorhanden, die jeweils einen etwa rechteckigen Querschnitt aufweisen und etwa parallel zueinander angeordnet sind. Jeweils zwei benachbarte Durchbrüche 90 sind etwa gleich voneinander beabstandet.

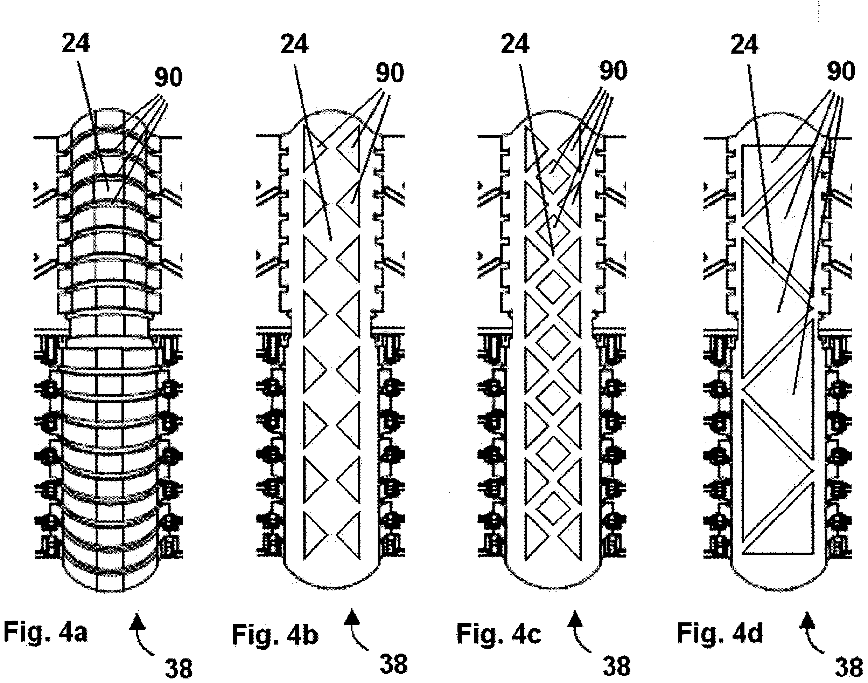

In den Fig. 4a bis 4d sind Vorderansichten von Ausschnitten von Manschettenelementen 38 im Bereich des Verbindungselements 24 in verschiedenen Ausführungsbeispielen gezeigt. Hierzu zeigt Fig. 4a die Ausbildung von jeweils einen etwa rechteckigen Querschnitt aufweisenden Durchbrüchen 90, die etwa parallel zueinander angeordnet sind. Jeweils zwei benachbarte Durchbrüche 90 sind etwa gleich voneinander beabstandet.

Aus Fig. 4b geht eine Anordnung von dreieckig ausgebildeten Durchbrüchen 90 hervor. Jeweils zwei benachbarte Durchbrüche 90 sind etwa gleich voneinander beabstandet.

Fig. 4c stellt eine Erweiterung der in Fig. 4b gezeigten Anordnung von Durchbrüchen 90 dar. Hierbei ist neben den dreieckig ausgebildeten Durchbrüchen 90 noch eine Ergänzung von etwa quadratisch ausgebildeten Durchbrüchen 90 vorgesehen. Die dreieckig ausgebildeten Durchbrüchen 90 und die etwa quadratisch ausgebildeten Durchbrüchen 90 sind symmetrisch angeordnet.

Schließlich geht aus Fig. 4d eine alternierende Anordnung von dreieckig ausgebildeten Durchbrüchen 90 hervor.

Es versteht sich, dass auch andere, hier nicht gezeigte Formen von Durchbrüchen 90 und Anordnungen von Durchbrüchen 90 am Verbindungselement 24 von der Erfindung umfasst sind.

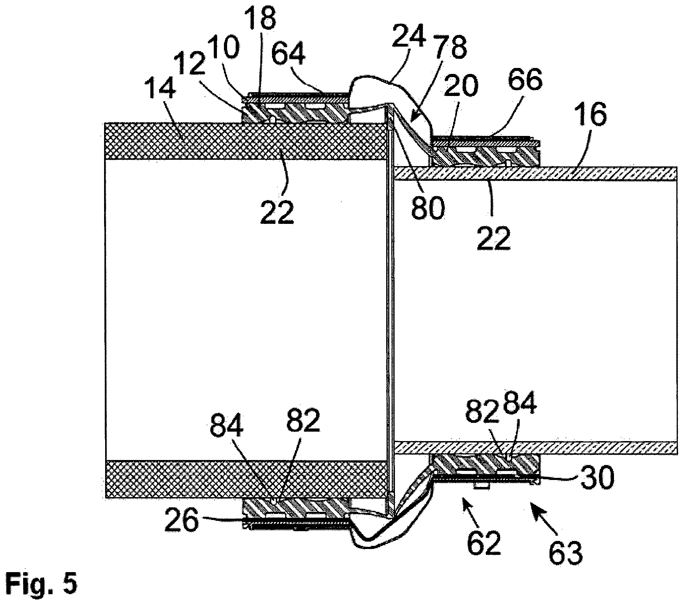

Die Fig. 5 zeigt eine Schnittdarstellung eines Ausführungsbeispiels eines erfindungsgemäßen Systems 62, das ein erstes und ein zweites Rohr 14, 16 miteinander verbindet und zusammen mit dem ersten und zweiten Rohr 14, 16 eine erfindungsgemäße Anordnung 63 bildet, wobei das zweite Rohr 16 einen kleineren Außendurchmesser als das erste Rohr 14 aufweist. Das System weist eine erfindungsgemäße Manschette 10, eine Dichtmanschette 12 und eine erste und eine zweite Spannschelle 64, 66 auf. Insbesondere diese Schnittdarstellung macht deutlich, dass mit der erfindungsgemäßen Manschette 10 insbesondere auch die Bereitstellung einer Verbindung zwischen Rohren mit unterschiedlichen Außendurchmessern möglich ist, und zwar dadurch, dass durch das Vorsehen der vergrößerbaren bzw. verkleinerbaren Überlappungsbereiche 34 vorteilhaft eine Anpassung der erfindungsgemäßen Manschette 10 an die bestehenden Abweichungen zwischen den Außendurchmesser erfolgen kann bzw. vorgenommen werden kann.

Zum Bilden der Verbindung nimmt ein erster Endabschnitt 18 von zwei Endabschnitten 18, 20 der Dichtmanschette 12 einen Rohrendabschnitt 22 des ersten Rohrs 14 auf und der zweite Endabschnitt 20 nimmt einen Rohrendabschnitt 22 des zweiten Rohrs 16 auf.

Die Dichtmanschette 12 hat einen Mittelbereich 78, der so geformt ist, dass er die Verformungen beim Verspannen aufnehmen kann. Ferner ist im mittleren Bereich der Dichtmanschette 12 eine Mittellippe 80 vorgesehen, die als Anschlag für das Rohr 14 dient und somit die Montage der Kupplung erleichtert.

An der Dichtmanschette 12 ist an jedem Endabschnitt 18, 20 jeweils eine sich ringförmig erstreckende Nut 82 vorgesehen, wobei in jeder Nut 82 jeweils eine ringförmige Quelldichtung 84 vorgesehen ist oder vorgesehen sein kann, welche eine erhöhte Sicherheit gegen Undichtheiten besonders bei nicht glatten Oberflächen (z.B. Betonrohren) bietet.

In anderen Ausbildungsformen der Erfindung kann auch vorgesehen sein, die Quelldichtung 84 in einer Nut 82 an einem anderen Ort an dem Endabschnitt 18, 20 anzubringen, beispielsweise einen Ort, der nahe der Mittellippe 80 liegt, zu wählen.

Der Querschnitt der Quelldichtung 84 kann beliebig gewählt werden und an die Erfordernisse hinsichtlich Quellverhalten und Dichtfunktion angepasst werden. Beispielsweise kann auch ein Querschnitt gewählt werden, der an den Buchstaben "E" erinnert, wobei das "E" abgerundet ist.

Die in der Fig. 5 nicht gezeigten Durchbrüche 90 im Verbindungselement 24 erleichtern die Verformung bei der fluiddichten Verbindung eines erstes und eines zweites Rohrs (14, 16) sehr unterschiedlichen Außendurchmessers.

### Bezugszeichenliste

- 10: Manschette
- 12: Dichtmanschette
- 14: erstes Rohr
- 16: zweites Rohr
- 18: erster Endabschnitt Dichtmanschette
- 20: zweiter Endabschnitt Dichtmanschette
- 22: Rohrendabschnitt
- 24: Verbindungselement
- 26: erster Manschetten-Endabschnitt
- 28: erste Öffnung
- 29: zweite Öffnung
- 30: zweiter Manschetten-Endabschnitt
- 32: erstes Anpresselement
- 34: Überlappungsbereich
- 36: erste Anpressfläche
- 37: zweite Anpressfläche
- 38: Manschettenelement
- 40: zweites Anpresselement
- 41: Anschlag
- 42: erster Anlagebereich
- 44: zweiter Anlagebereich
- 46: Durchbruch
- 48: Führungseinrichtung
- 49: Randelement
- 50: erste Spannschellen-Führungsvorrichtung
- 52: zweite Spannschellen-Führungsvorrichtung
- 54: erster Führungssteg
- 56: zweiter Führungssteg
- 62: System
- 63: Anordnung
- 64: erste Spannschelle
- 66: zweite Spannschelle
- 78: Mittelbereich
- 80: Mittellippe
- 82: Nut
- 84: Quelldichtung
- 90: Durchbruch

## Patentansprüche

1. Manschette (10) zum Anpressen einer Dichtmanschette (12) an ein erstes und ein zweites Rohr (14, 16), die über die Dichtmanschette (12) miteinander verbunden sind, wobei zum Bilden der Verbindung ein erster von zwei Endabschnitten (18, 20) der Dichtmanschette (12) einen Rohrendabschnitt (22) des ersten Rohrs (14) aufnimmt und der zweite Endabschnitt (20) einen Rohrendabschnitt (22) des zweiten Rohrs (16) aufnimmt, wobei die Manschette (10) eine Mehrzahl von ersten Anpresselementen (32) und eine Mehrzahl von zweiten Anpresselementen (40) aufweist, wobei jedes erste und jedes zweite Anpresselement (32, 40) wenigstens teilweise aus einem verformbaren Material besteht, wobei die ersten Anpresselemente (32) entlang eines Umfangs eines ersten Kreises (33) aufeinanderfolgend angeordnet sind und einen ersten Manschetten-Endabschnitt (26) mit einer ersten Öffnung (28) zur Aufnahme des ersten Endabschnitts (18) der Dichtmanschette (12) bilden, wobei die zweiten Anpresselemente (40) entlang eines Umfangs eines zweiten Kreises aufeinanderfolgend angeordnet sind und einen zweiten Manschetten-Endabschnitt (30) mit einer zweiten Öffnung (29) zur Aufnahme des zweiten Endabschnitts (20) der Dichtmanschette (12) bilden, wobei wenigstens ein erstes Anpresselement (32) mit einem zweiten Anpresselement (40) durch wenigstens ein verformbares Verbindungselement (24) verbunden ist, wobei sich jeweils zwei benachbarte erste Anpresselemente (32) des ersten Manschetten-Endabschnitts (26) in radialer Richtung des ersten Kreises innerhalb eines Überlappungsbereichs (34) überlappen, wobei eines der beiden benachbarten ersten Anpresselemente (32) an dem jeweiligen anderen ersten Anpresselement (32) beweglich angebracht ist, und wobei der Überlappungsbereich (34) durch aufeinander Zubewegen der benachbarten ersten Anpresselemente (32) vergrößerbar oder durch voneinander Wegbewegen der benachbarten ersten Anpresselemente (32) verkleinerbar ist, wobei sich jeweils zwei benachbarte zweite Anpresselemente (40) des zweiten Manschetten-Endabschnitts (30) in radialer Richtung des zweiten Kreises innerhalb eines Überlappungsbereichs (34) überlappen, wobei eines der beiden benachbarten zweiten Anpresselemente (40) an dem jeweiligen anderen zweiten Anpresselement (40) beweglich angebracht ist, und wobei der Überlappungsbereich (34) durch aufeinander Zubewegen der benachbarten zweiten Anpresselemente (40) vergrößerbar oder durch voneinander Wegbewegen der benachbarten zweiten Anpresselemente (40) verkleinerbar ist, wobei jedes erste Anpresselement (32) wenigstens eine erste Anpressfläche (36) aufweist, die zum Anpressen des ersten Endabschnitts (18) der Dichtmanschette (12) an den Rohrendabschnitt (22) des ersten Rohrs (14) vorgesehen ist, wenn dieser in der ersten Öffnung (28) aufgenommen ist, wobei jedes zweite Anpresselement (40) wenigstens eine zweite Anpressfläche (37) aufweist, die zum Anpressen des zweiten Endabschnitts (20) der Dichtmanschette (12) an den Rohrendabschnitt (22) des zweiten Rohrs (16) vorgesehen ist, wenn dieser in der zweiten Öffnung (29) aufgenommen ist, wobei durch Vergrößern aller Überlappungsbereiche (34) des ersten Manschetten-Endabschnitts (26) die erste Öffnung (28) des ersten Manschetten-Endabschnitts (26) unter Verformung aller ersten Anpresselemente (32) verengbar ist, wobei durch Vergrößern aller Überlappungsbereiche (34) des zweiten Manschetten-Endabschnitts (30) die zweite Öffnung (29) des zweiten Manschetten-Endabschnitts (30) unter Verformung aller zweiten Anpresselemente (40) verengbar ist, wobei durch das Verengen der ersten Öffnung (28) die ersten Anpressflächen (36) aller ersten Anpresselemente (32) an den ersten Endabschnitt (18) der Dichtmanschette (12) anpressbar sind, und wobei durch das Verengen der zweiten Öffnung (29) die zweiten Anpressflächen (37) aller zweiten Anpresselemente (40) an den zweiten Endabschnitt (20) der Dichtmanschette (12) anpressbar sind, **dadurch gekennzeichnet, dass** das Verbindungselement (24) wenigstens einen Durchbruch (90) aufweist.

2. Manschette (10) nach Anspruch 1, **dadurch gekennzeichnet, dass** das Verbindungselement (24) eine Vielzahl von Durchbrüchen (90) aufweist.

3. Manschette (10) nach Anspruch 1 oder 2, **dadurch gekennzeichnet, dass** der Durchbruch (90) eine Rechteckform, oder eine Quadratform, oder eine Dreiecksform, oder eine Vieleckform, oder eine Ellipsenform, oder eine Kreisform, oder eine Y-Form, oder eine H-Form, oder eine Mischform aus den vorgenannten Formen aufweist.

4. Manschette (10) nach einem der vorangehenden Ansprüche, **dadurch gekennzeichnet, dass** die Durchbrüche (90) von gleicher Form sind.

5. Manschette (10) nach einem der Ansprüche 1 bis 3, **dadurch gekennzeichnet, dass** die Durchbrüche (90) von unterschiedlicher Form sind.

6. Manschette (10) nach einem der vorangehenden Ansprüche, **dadurch gekennzeichnet, dass** benachbarte Durchbrüche (90) voneinander gleich oder ungleich beabstandet angeordnet sind.

7. Manschette (10) nach einem der Ansprüche 1 bis 5, **dadurch gekennzeichnet, dass** benachbarte Durchbrüche (90) symmetrisch angeordnet sind.

8. Manschette (10) nach einem der vorangehenden Ansprüche, **dadurch gekennzeichnet, dass** das Verbindungselement (24), welches wenigstens einen Durchbruch (90) aufweist, und das erste und das zweite Anpresselement (32, 40) ein einstückiges Manschettenelement (38) bilden.

9. System (62) mit einer Manschette (10) nach einem der Ansprüche 1 bis 8, einer Dichtmanschette (12), wenigstens einer ersten Spannschelle (64) und wenigstens einer zweiten Spannschelle (66).

10. Anordnung (63) umfassend ein System (62) nach Anspruch 9 und ein erstes und ein zweites Rohr (14, 16), die über die Dichtmanschette (12) miteinander verbunden sind, wobei zum Bilden der Verbindung ein erster von zwei Endabschnitten (18, 20) der Dichtmanschette (12) einen Rohrendabschnitt (22) des ersten Rohrs (14) aufnimmt und der zweite Endabschnitt (20) einen Rohrendabschnitt (22) des zweiten Rohrs (16) aufnimmt, wobei der erste Manschetten-Endabschnitt (26) an den ersten Endabschnitt (18) der Dichtmanschette (12) gepresst ist, wobei der zweite Manschetten-Endabschnitt (30) an den zweiten Endabschnitt (20) der Dichtmanschette (12) gepresst ist.

## Claims

1. A sleeve (10) for pressing a sealing sleeve (12) on to a first and a second pipe (14, 16), which are connected to each other by means of said sealing sleeve (12), wherein to form the connection a first of two end segments (18, 20) of said sealing sleeve (12) receives a pipe end segment (22) of said first pipe (14) and the second end segment (20) receives a pipe end segment (22) of said second pipe (16), wherein said sleeve (10) has a plurality of first pressing elements (32) and a plurality of second pressing elements (40), wherein each first and each second pressing element (32, 40) consists at least partly of a deformable material, wherein said first pressing elements (32) are arranged consecutively along a circumference of a first circle (33) and form a first sleeve end segment (26) with a first opening (28) for receiving said first end segment (18) of said sealing sleeve (12), wherein said second pressing elements (40) are arranged consecutively along a circumference of a second circle and form a second sleeve end segment (30) with a second opening (29) for receiving said second end segment (20) of said sealing sleeve (12), wherein at least one first pressing element (32) is connected to a second pressing element (40) by at least one deformable connecting element (24), wherein in each case two adjacent first pressing elements (32) of said first sleeve end segment (26) overlap in a radial direction of said first circle within an overlap region (34), wherein one of the two adjacent first pressing elements (32) is movably attached to the other first pressing element (32) in each case, and wherein said overlap region (34) can be enlarged by moving said adjacent first pressing elements (32) towards each other or can be diminished by moving said adjacent first pressing elements (32) away from each other, wherein in each case two adjacent second pressing elements (40) of said second sleeve end segment (30) overlap in a radial direction of said second circle within an overlap region (34), wherein one of the two adjacent second pressing elements (40) is movably attached to the other second pressing element (40) in each case, and wherein said overlap region (34) can be enlarged by moving said adjacent second pressing elements (40) towards each other or can be diminished by moving said adjacent second pressing elements (40) away from each other, wherein each first pressing element (32) has at least one first pressing surface (36), which is provided for pressing said first end segment (18) of said sealing sleeve (12) on to said pipe end segment (22) of said first pipe (14) when this is received in said first opening (28), wherein each second pressing element (40) has at least one second pressing surface (37) which is provided for pressing said second end segment (20) of said sealing sleeve (12) on to said pipe end segment (22) of said second pipe (16) when this is received in said second opening (29), wherein by enlarging all the overlap regions (34) of said first sleeve end segment (26) said first opening (28) of said first sleeve end segment (26) can be narrowed by deforming all said first pressing elements (32), wherein by enlarging all said overlap regions (34) of said second sleeve end segment (30) said second opening (29) of said second sleeve end segment (30) can be narrowed by deforming all said second pressing elements (40), wherein by narrowing said first opening (28) said first pressing surfaces (36) of all said first pressing elements (32) can be pressed on to said first end segment (18) of said sealing sleeve (12), and wherein by narrowing said second opening (29) said second pressing surfaces (37) of all said second pressing elements (40) can be pressed on to said second end segment (20) of said sealing sleeve (12), **characterised in that** said connecting element (24) has at least one aperture (90).

2. The sleeve (10) according to claim 1, **characterised in that** the connecting element (24) has a plurality of apertures (90).

3. The sleeve (10) according to claim 1 or 2, **characterised in that** the aperture (90) has a rectangular shape or a square shape or a triangular shape or a polygonal shape or an elliptical shape or a circular shape or a Y shape or an H shape or a shape which is a mixture of the aforementioned shapes.

4. The sleeve (10) according to one of the preceding claims, **characterised in that** the apertures (90) are of the same shape.

5. The sleeve (10) according to one of claims 1 to 3, **characterised in that** the apertures (90) are of different shapes.

6. The sleeve (10) according to one of the preceding claims, **characterised in that** adjacent apertures (90) are arranged at equal or unequal distances from each other.

7. The sleeve (10) according to one of claims 1 to 5, **characterised in that** adjacent apertures (90) are arranged symmetrically.

8. The sleeve (10) according to one of the preceding claims, **characterised in that** the connecting element (24), which has at least one aperture (90), and the first and second pressing elements (32, 40) form a one-piece sleeve element (38).

9. A system (62) having a sleeve (10) according to one of claims 1 to 8, a sealing sleeve (12), at least one first clamp (64) and at least one second clamp (66).

10. An assembly (63) comprising a system (62) according to claim 9 and a first and a second pipe (14, 16), which are connected to each other via the sealing sleeve (12), wherein to form the connection a first of two end segments (18, 20) of said sealing sleeve (12) receives a pipe end segment (22) of said first pipe (14) and the second end segment (20) receives a pipe end segment (22) of said second pipe (16), wherein the first sleeve end segment (26) is pressed on to said first end segment (18) of said sealing sleeve (12), wherein the second sleeve end segment (30) is pressed on to said second end segment (20) of said sealing sleeve (12).

## Revendications

1. Manchette (10) destinée à presser une manchette d'étanchéité (12) sur un premier et un deuxième tubes (14, 16) qui sont reliés entre eux par l'intermédiaire de la manchette d'étanchéité (12), une première de deux sections terminales (18, 20) de la manchette d'étanchéité (12) logeant une section terminale de tube (22) du premier tube (14) et la deuxième section terminale (20) logeant une section terminale de tube (22) du deuxième tube (16) pour former la liaison, la manchette (10) présentant une pluralité de premiers éléments de pressage (32) et une pluralité de deuxièmes éléments de pressage (40), chaque premier et chaque deuxième éléments de pressage (32, 40) étant constitués au moins en partie d'une matière déformable, les premiers éléments de pressage (32) étant disposés en se suivant le long d'une circonférence d'un premier cercle (33) et formant une première section terminale (26) de manchette munie d'une première ouverture (28) pour le logement de la première section terminale (18) de la manchette d'étanchéité (12), les deuxièmes éléments de pressage (40) étant disposés en se suivant le long d'une circonférence d'un deuxième cercle et formant une deuxième section terminale (30) de manchette munie d'une deuxième ouverture (29) pour le logement de la deuxième section terminale (20) de la manchette d'étanchéité (12), au moins un premier élément de pressage (32) étant relié à un deuxième élément de pressage (40) au moyen d'au moins un élément de liaison (24) déformable, respectivement deux premiers éléments de pressage (32) adjacents de la première section terminale (26) de manchette se chevauchant à l'intérieur d'une zone de chevauchement (34) en direction radiale du premier cercle, un des deux premiers éléments de pressage (32) adjacents étant placé de manière mobile sur l'autre premier élément de pressage (32) respectif, et la zone de chevauchement pouvant être agrandie par déplacement l'un vers l'autre des premiers éléments de pressage (32) adjacents et pouvant être réduite par éloignement l'un de l'autre des premiers éléments de pressage (32) adjacents, respectivement deux deuxièmes éléments de pressage (40) adjacents de la deuxième section terminale (30) de manchette se chevauchant à l'intérieur d'une zone de chevauchement (34) en direction radiale du deuxième cercle, un des deux deuxièmes éléments de pressage (40) adjacents étant placé de manière mobile sur le deuxième autre élément de pressage (40) respectif, et la zone de chevauchement (34) pouvant être agrandie par déplacement l'un vers l'autre des deuxièmes éléments de pressage (40) adjacents et pouvant être réduite par éloignement l'un de l'autre des deuxièmes éléments de pressage (40) adjacents, chaque premier élément de pressage (32) présentant au moins une surface de pressage (36) qui est ménagée pour presser la première section terminale (18) de la manchette d'étanchéité (12) sur la section terminale de tube (22) du premier tube (14) lorsque celle-ci est logée dans la première ouverture (28), chaque deuxième élément de pressage (40) présentant au moins une deuxième surface de pressage (37) qui est ménagée pour presser la deuxième section terminale (20) de la manchette d'étanchéité (12) sur la section terminale de tube (22) du deuxième tube (16) lorsque celle-ci est logée dans la deuxième ouverture (29), la première ouverture (28) de la première section terminale (26) de manchette, en raison de l'agrandissement de toutes les zones de chevauchement (34) de la première section terminale (26) de manchette, pouvant être rétrécie par déformation de tous les premiers éléments de pressage (32), la deuxième ouverture (29) de la deuxième section terminale (30) de manchette, en raison de l'agrandissement de toutes les zones de chevauchement (34) de la deuxième section terminale (30) de manchette, pouvant être rétrécie par déformation de tous les deuxièmes éléments de pressage (40), les premières surfaces de pressage (36) de tous les premiers éléments de pressage (32) pouvant être pressées sur la première section terminale (18) de la manchette d'étanchéité (12) en raison du rétrécissement de la première ouverture (28), les deuxièmes surfaces de pressage (37) de tous les deuxièmes éléments de pressage (40) pouvant être pressées sur la deuxième section terminale (20) de la manchette d'étanchéité (12) en raison du rétrécissement de la deuxième ouverture (29), **caractérisée en ce que** l'élément de liaison (24) présente au moins un passage (90).

2. Manchette (10) selon la revendication 1, **caractérisée en ce que** l'élément de liaison (24) présente une pluralité de passages (90).

3. Manchette (10) selon la revendication 1 ou 2, **caractérisée en ce que** le passage (90) présente une forme rectangulaire ou une forme carrée, ou une forme triangulaire, ou une forme polygonale, ou une forme elliptique, ou une forme circulaire, ou une forme en Y, ou une forme en H, ou une forme mixte à partir des formes mentionnées plus haut.

4. Manchette (10) selon l'une quelconque des revendications précédentes, **caractérisée en ce que** les passages (90) sont de même forme.

5. Manchette (10) selon l'une quelconque des revendications 1 à 3, **caractérisée en ce que** les passages (90) sont de forme différente.

6. Manchette (10) selon l'une quelconque des revendications précédentes, **caractérisée en ce que** des passages (90) voisins sont disposés en étant distancés les uns des autres de manière identique ou de manière non identique.

7. Manchette (10) selon l'une quelconque des revendications 1 à 5, **caractérisée en ce que** les passages (90) voisins sont disposés de manière symétrique.

8. Manchette (10) selon l'une quelconque des revendications précédentes, **caractérisée en ce que** l'élément de liaison (24), lequel présente au moins un passage (90), ainsi que le premier et le deuxième éléments de pressage (32, 40) forment un élément de manchette (38) d'une seule pièce.

9. Système (62) comprenant une manchette (10) selon l'une quelconque des revendications 1 à 8, une manchette d'étanchéité (12), au moins un premier collier de serrage (64) et au moins un deuxième collier de serrage (66),

10. Agencement (63) comprenant un système (62) selon la revendication 9 et un premier et un deuxième tubes (14, 16) qui sont reliés entre eux par l'intermédiaire de la manchette d'étanchéité (12), une première de deux sections terminale (18, 20) de la manchette d'étanchéité (12) logeant une section terminale de tube (22) du premier tube (14) et la deuxième section terminale (20) logeant une section terminale de tube (22) du deuxième tube (16) pour former la liaison, la première section terminale (26) de manchette étant pressée sur la première section terminale (18) de la manchette d'étanchéité (12), la deuxième section terminale (30) de manchette étant pressée sur la deuxième section terminale (20) de la manchette d'étanchéité (12).
